(19) Europäisches Patentamt / European Patent Office / Office européen des brevets

(11) **EP 4 296 328 A1**

(12) **EUROPEAN PATENT APPLICATION**
published in accordance with Art. 153(4) EPC

(43) Date of publication:
**27.12.2023 Bulletin 2023/52**

(21) Application number: **22755979.6**

(22) Date of filing: **04.02.2022**

(51) International Patent Classification (IPC):
**C09J 11/06** (2006.01)    **G02C 1/06** (2006.01)
**C09J 167/02** (2006.01)    **C09J 7/35** (2018.01)
**G02B 1/04** (2006.01)    **G02B 7/00** (2021.01)

(52) Cooperative Patent Classification (CPC):
**C09J 7/35; C09J 11/06; C09J 167/02; G02B 1/04; G02B 7/00; G02C 1/06**

(86) International application number:
**PCT/JP2022/004554**

(87) International publication number:
**WO 2022/176658 (25.08.2022 Gazette 2022/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **19.02.2021 JP 2021025496**

(71) Applicant: **Nitto Denko Corporation**
**Ibaraki-shi, Osaka 567-8680 (JP)**

(72) Inventors:
- **OGAWA, Taishi**
  **Ibaraki-shi, Osaka 567-8680 (JP)**
- **TANAKA, Akiko**
  **Ibaraki-shi, Osaka 567-8680 (JP)**
- **MIZUNO, Mizuho**
  **Ibaraki-shi, Osaka 567-8680 (JP)**
- **NAKAMURA, Kozo**
  **Ibaraki-shi, Osaka 567-8680 (JP)**

(74) Representative: **Hoffmann Eitle**
**Patent- und Rechtsanwälte PartmbB**
**Arabellastraße 30**
**81925 München (DE)**

(54) **ADHESIVE AGENT LAYER AND OPTICAL LAYERED BODY HAVING ADHESIVE AGENT LAYER**

(57)    An adhesive layer is formed by cross-linking an adhesive composition containing: a polyester resin that is a copolymer of a polycarboxylic acid and a polyalcohol; a cross-linking agent; and at least one cross-linking catalyst selected from the group consisting of an organic zirconium compound, an organic iron compound, and an organic aluminum compound, the adhesive layer having a gel fraction of 40% or more after being retained at a temperature of 85°C and a relative humidity of 85% for 300 hours, and having a 180° peel adhesive strength of 100 mN/20 mm or more with respect to a PMMA film.

*FIG.1*

EP 4 296 328 A1

**Description**

## TECHNICAL FIELD

The present invention relates to an adhesive layer and an optical stack having such an adhesive layer.

## BACKGROUND ART

Optical sheets (e.g., microlens sheets, prism sheets, brightness enhancement films (e.g., Brightness Enhancement Film: BEF (registered trademark) manufactured by 3M) are used in various optical devices (e.g., display devices and illumination devices). In the present specification, "optical sheet" is not limited to those illustrated above, but broadly includes sheet-shaped optical components, and further includes, for example, diffusion plates and light guide plates. An optical device is attached to another optical sheet or an optical device by using an adhesive layer, for example. In the present specification, "optical stack" refers to a configuration including an optical sheet and an adhesive layer or including a plurality of optical sheets. In the present specification, "adhesive" is meant to encompass tackiness agents (also referred to as "pressure-sensitive adhesives").

The applicant has disclosed an optical stack (referred to as "optical sheet" in Patent Document 1) that can be used for display devices and illumination devices in Patent Document 1. The optical stack in Patent Document 1 has an optical sheet (e.g., microlens sheet) having a concavo-convex structure on its surface and an adhesive layer provided on the surface having the concavo-convex structure. The adhesive layer fills 5% to 90% of the convex height of the concavo-convex structure. The adhesive layer is formed from an adhesive composition containing a graft polymer, which is a (meth)acrylic polymer grafted with chains containing monomers containing cyclic ether groups, and a cationic photopolymerization initiator or heat-curing catalyst.

Moreover, Patent Documents 2 and 3 disclose light distribution structures that may be used for display devices or illumination devices, in which total reflection at interfaces of multiple air cavities is utilized. With the light distribution structures disclosed in Patent Documents 2 and 3, freedom and accuracy of light distribution control can be improved.

## CITATION LIST

## PATENT LITERATURE

    [Patent Document 1] Japanese Laid-Open Patent Publication No. 2012-007046
    [Patent Document 2] International Publication No. 2011/124765
    [Patent Document 3] International Publication No. 2019/087118

## SUMMARY OF INVENTION

## TECHNICAL PROBLEM

When attaching an adhesive layer onto a surface of an optical sheet having a concavo-convex structure, the degree to which the adhesive layer penetrates into (fills in) the dents of the concavo-convex structure affects the functionality of the optical sheet. Therefore, it is desired that the degree to which the adhesive layer penetrates into the dents of the concavo-convex structure (i.e., a ratio of the volume of any adhesive layer existing in spaces that are defined by the dents of the concavo-convex structure to the volume of such spaces) does not change over time, or change within an actual environment of use, e.g., a high-temperature environment, a humid environment, or a high-temperature and humid environment. According to a study by the inventors, conventional adhesive layers may not have adequately reduced change over time in their degree of penetration into the dents of a concavo-convex structure.

The present invention has been made in order to solve the aforementioned problems, and an objective thereof is to provide: an adhesive layer which, when attached onto a surface having a concavo-convex structure (e.g., a surface of an optical sheet having a concavo-convex structure), exhibits good adhesion with respect to the surface having the concavo-convex structure and yet the change over time in its degree of penetration into the dents of the concavo-convex structure (including change over time in a high-temperature and humid environment) is reduced; and an optical stack having such an adhesive layer.

**SOLUTION TO PROBLEM**

According to embodiments of the present invention, means for solution as recited in the following Items are provided.

[Item 1]

An adhesive layer formed by cross-linking an adhesive composition containing: a polyester resin that is a copolymer of a polycarboxylic acid and a polyalcohol; a cross-linking agent; and at least one cross-linking catalyst selected from the group consisting of an organic zirconium compound, an organic iron compound, and an organic aluminum compound,

the adhesive layer having a gel fraction of 40% or more after being retained at a temperature of 85°C and a relative humidity of 85% for 300 hours, and
the adhesive layer having a 180° peel adhesive strength of 100 mN/20 mm or more with respect to a PMMA film.

[Item 2]

The adhesive layer of Item 1, wherein the polycarboxylic acid comprises an aromatic dicarboxylic acid.

[Item 3]

The adhesive layer of Item 1 or 2, wherein the polyalcohol comprises an aliphatic diol or an alicyclic diol.

[Item 4]

The adhesive layer of any one of Items 1 to 3, wherein the cross-linking agent comprises an isocyanate-based cross-linking agent.

[Item 5]

The adhesive layer of Item 4, wherein the isocyanate-based cross-linking agent comprises an aliphatic isocyanate-based cross-linking agent.

[Item 6]

The adhesive layer of any one of Items 1 to 5, having a thickness of not less than 3 um and not more than 20 um.

[Item 7]

The adhesive layer of any one of Items 1 to 6, having a gel fraction of 55% or more after being retained at a temperature of 85°C and a relative humidity of 85% for 300 hours.

[Item 8]

The adhesive layer of any one of Items 1 to 7, having a creep deformation rate of 10% or less when a stress of 10,000 Pa is applied for 1 second at 50°C and a creep deformation rate of 16% or less when a stress of 10,000 Pa is applied for 30 minutes at 50°C in a creep test using a rotational rheometer.

[Item 9]

An optical stack comprising:

a first optical sheet that includes a first principal face having a concavo-convex structure and a second principal face at an opposite side from the first principal face; and
the adhesive layer of any one of Items 1 to 8 being disposed on the first principal face of the first optical sheet, wherein the concavo-convex structure includes flat portions that are in contact with the adhesive layer.

[Item 10]

The optical stack of Item 9, further comprising a second optical sheet that is disposed at an opposite side of the adhesive layer from the first optical sheet.

**ADVANTAGEOUS EFFECTS OF INVENTION**

According to embodiments of the present invention, there are provided: an adhesive layer which, when attached onto a surface having a concavo-convex structure (e.g., a surface of an optical sheet having a concavo-convex structure), exhibits good adhesion with respect to the surface having the concavo-convex structure and yet the change over time in its degree of penetration into the dents of the concavo-convex structure is reduced; and an optical stack having such an adhesive layer.

**BRIEF DESCRIPTION OF DRAWINGS**

[FIG. **1**] A schematic cross-sectional view of an optical stack **100A** according to an embodiment of the present invention.
[FIG. **2**] A schematic cross-sectional view of an optical stack **101A** according to another embodiment of the present invention.
[FIG. **3**] A schematic cross-sectional view of an optical stack **102A** according to still another embodiment of the present invention.
[FIG. **4**] A schematic cross-sectional view of an optical stack **100B** and an optical stack **101B** according to still another embodiment of the present invention.
[FIG. **5**] A schematic perspective view of a first optical sheet **10b** included in the optical stack **100B**.
[FIG. **6**] A schematic cross-sectional view of an illumination device **200** including the optical stack **100B**.
[FIG. **7A**] A schematic plan view of a textured film **70** included in an optical stack according to an embodiment of the present invention.
[FIG. **7B**] A schematic cross-sectional view of the textured film **70**.

**DESCRIPTION OF EMBODIMENTS**

<adhesive layer>

First, an adhesive layer according to an embodiment of the present invention will be described. Embodiments of the present invention are not limited to the examples described below.
An adhesive layer according to an embodiment of the present invention is formed by cross-linking an adhesive composition containing: a polyester resin that is a copolymer of a polycarboxylic acid and a polyalcohol; a cross-linking agent; and at least one cross-linking catalyst selected from the group consisting of an organic zirconium compound, an organic iron compound, and an organic aluminum compound, the adhesive layer having a gel fraction of 40% or more after being retained at a temperature of 85°C and a relative humidity of 85% for 300 hours, and having a 180° peel adhesive strength of 100 mN/20 mm or more with respect to a PMMA film. An adhesive layer according to an embodiment of the present invention may be attached onto a surface of an optical sheet having a concavo-convex structure, in order to allow the optical sheet to be attached to another optical sheet, or to an optical component or an optical device, for example. Moreover, by using a textured film having a plurality of dents on a surface thereof and an adhesive layer according to an embodiment of the present invention, it is possible to construct a lightguide layer and/or a redirection layer including a plurality of spaces (internal spaces). A lightguide layer and/or a redirection layer including a plurality of spaces (internal spaces) can function as a light distribution control structure. An adhesive layer according to an embodiment of the present invention can be attached not only onto a surface having a concavo-convex structure but also onto a flat surface. For example, it may be attached onto a flat surface of an optical sheet, in order to allow the optical sheet to be attached to another optical sheet, or onto an optical component or an optical device.
The inventors have found that, by cross-linking an adhesive composition containing a polyester resin, a cross-linking agent, and a cross-linking catalyst(s), it is possible to obtain an adhesive layer which, when attached onto a surface having a concavo-convex structure, exhibits good adhesion with respect to the surface having the concavo-convex structure, and in which the change over time in its degree of penetration into the dents of the concavo-convex structure (i.e., a ratio of the volume of any adhesive layer existing in spaces that are defined by the dents of the concavo-convex structure to the volume of such spaces), or in particular, change over time in a high-temperature and humid environment, is reduced. The degree to which the adhesive layer penetrates into the dents of the concavo-convex structure (i.e., a ratio of the volume of any adhesive layer existing in spaces that are defined by the dents of the concavo-convex structure to the volume of such spaces) can be quantitated in terms of, for example, a ratio of the height of any adhesive layer that has penetrated into the dents (or into the regions defined by the dents) from the plane at which the adhesive layer and a textured film (optical sheet) are adhesively bonded, relative to the depth of dents.

The inventors have found that, when an adhesive layer is attached onto a surface having a concavo-convex structure, the change over time in the degree to which the adhesive layer penetrates into the dents of the concavo-convex structure has a correlation with the change over time in a gel fraction of the adhesive layer in a high-temperature and high-humidity environment. According to a study by the inventors, when a conventional adhesive layer that is made of a polyester resin is retained at a temperature of 85°C and a relative humidity of 85% for 300 hours, a hydrolysis of the ester linkage occurs, whereby the gel fraction often lowers to essentially zero. In such an adhesive layer, the change over time in its degree of penetration into the dents of the concavo-convex structure is not adequately reduced. On the other hand, an adhesive layer according to an embodiment of the present invention has a gel fraction of 40% or more after being retained at a temperature of 85°C and a relative humidity of 85% for 300 hours, and, as will be illustrated later by Examples, the change over time in its degree of penetration into the dents of the concavo-convex structure is reduced in a high-temperature and high-humidity environment. The gel fraction after the adhesive layer is retained at a temperature of 85°C and a relative humidity of 85% for 300 hours may be e.g. 550 or more, 600 or more, 650 or more, or 70% or more. Preferably, the gel fraction immediately after the adhesive layer according to an embodiment of the present invention is attached onto a surface having a concavo-convex structure is e.g. 500 or more.

The gel fraction of the adhesive layer according to an embodiment of the present invention after being retained at a temperature of 85°C and a relative humidity of 85% for 300 hours is about the same as its gel fraction immediately after the adhesive layer is attached onto a surface having a concavo-convex structure, or, if all it decreases, it is maintained at a gel fraction of 40% or more. As will be later illustrated by Examples, when an adhesive layer according to an embodiment of the present invention is attached onto a surface having a concavo-convex structure, penetration into the dents of the concavo-convex structure is reduced, and the change over time in its degree of penetration into the dents of the concavo-convex structure (including change over time in a high-temperature and humid environment) is reduced. It has not been possible to investigate yet into the correlation between: the fact that the adhesive layer according to an embodiment of the present invention is formed by cross-linking an adhesive composition containing a polyester resin, a cross-linking agent, and at least one cross-linking catalyst selected from the group consisting of an organic zirconium compound, an organic iron compound, and an organic aluminum compound; and the fact that its gel fraction after the adhesive layer is retained at a temperature of 85°C and a relative humidity of 85% for 300 hours is maintained at 40% or more. It may be conceivable, however, that hydrolysis of the ester linkage is suppressed in the adhesive layer according to an embodiment of the present invention having a characteristic cross-linked structure which is formed by cross-linking an adhesive composition containing a polyester resin, a cross-linking agent, and a cross-linking catalyst for example.

In an adhesive layer according to an embodiment of the present invention, as the temperature and/or humidity decreases, the change over time in its degree of penetration into the dents of the concavo-convex structure decreases. For example, a further reduction is obtained in a normal-temperature and normal-humidity environment than in a high-temperature and high-humidity environment.

On the basis of a 180° peel adhesive strength of the adhesive layer with respect to a PMMA film, the inventors have evaluated the adhesion of the adhesive layer with respect to a surface having a concavo-convex structure. Because an adhesive layer according to an embodiment of the present invention has a 180° peel adhesive strength of 100 mN/20 mm or more with respect to a PMMA film, it has good adhesion with respect to a surface having a concavo-convex structure. The 180° peel adhesive strength of the adhesive layer with respect to a PMMA film may be e.g. 500 mN/20 mm or more. Note that a 180° peel adhesive strength of the adhesive layer with respect to a PMMA film can be measured by the method of measuring a 180° peel adhesive strength of an adhesive layer with respect to a PMMA film that is used in the below-described Examples, for example.

The thickness of an adhesive layer according to an embodiment of the present invention is not particularly limited, and may be set in accordance with the form and application. The thickness of the adhesive layer is e.g. 3 μm or more, 4 μm or more, or 5 μm or more: for example, 20 μm or less, 15 μm or less, or 10 μm or less.

As described in International Publication No. 2021/167090 by the applicant, when an adhesive layer is attached onto a surface of an optical sheet having a concavo-convex structure, its degree of penetration into the dents and the change over time thereof are correlated with a creep deformation rate of the adhesive layer. Specifically, an adhesive layer having a creep deformation rate of 10% or less when a stress of 10,000 Pa is applied for 1 second at 50°C in a creep test using a rotational rheometer (which may be referred to as "creep deformation rate A") has a reduced degree of penetration into the dents of the concavo-convex structure, when being attached onto a surface having the concavo-convex structure; and an adhesive layer having a creep deformation rate of 16% or less when a stress of 10,000 Pa is applied for 30 minutes (1800 seconds) at 50°C in a creep test using a rotational rheometer (which may be referred to as "creep deformation rate B") has reduced change over time in its degree of penetration into the dents of the concavo-convex structure. The entire disclosure of International Publication No. 2021/167090 is incorporated herein by reference.

An adhesive layer according to an embodiment of the present invention may have a creep deformation rate as described in the aforementioned International Publication No. 2021/167090. In other words, an adhesive layer according to an embodiment of the present invention may have a creep deformation rate of 10% or less when a stress of 10,000 Pa is applied for 1 second at 50°C in a creep test using a rotational rheometer, and a creep deformation rate of 16% or less when a stress of 10,000 Pa is applied for 30 minutes at 50°C in a creep test using a rotational rheometer in a creep test using a rotational rheometer. The creep deformation rate can be measured by a measurement method described in the following Examples. An adhesive layer according to an embodiment of the present invention has a creep deformation rate A of e.g. 10% or less, 90 or less, 80 or less, 70 or less, 60 or less, 50 or less, or 2% or less, and a creep deformation rate B of e.g. 16% or less, 15% or less, 14% or less, 13% or less, 12% or less, 11% or less, 10% or less, or 30 or less. Although the lower limits of creep deformation rates A and B are not particularly limited, they may be e.g. more than 0.

As an example of an adhesive layer having a creep deformation rate of 10% or less when a stress of 10,000 Pa is applied for 1 second at 50°C and a creep deformation rate of 16% or less when a stress of 10,000 Pa is applied for 30 minutes at 50°C in a creep test using a rotational rheometer, the aforementioned International Publication No. 2021/167090 describes an adhesive layer formed by cross-linking an adhesive composition that contains a polyester resin and a cross-linking agent. However, the aforementioned International Publication No. 2021/167090 fails to describe forming an adhesive layer by cross-linking an adhesive composition that contains a cross-linking catalyst in addition to a polyester resin and a cross-linking agent. The inventors have found that, by cross-linking an adhesive composition that contains a cross-linking catalyst in addition to a polyester resin and a cross-linking agent, it is possible to enhance the effect of reducing the change over time in its degree of penetration into the dents of the concavo-convex structure, especially a change in an actual environment of use such as a high-temperature and humid environment.

Specific example compositions for an adhesive layer according to an embodiment of the present invention will be described below.

<polycarboxylic acid>

Examples of polycarboxylic acids include:

aromatic dicarboxylic acids, such as terephthalic acid, isophthalic acid, benzylmalonic acid, diphenic acid, 4,4'-oxydibenzoic acid, and naphthalene dicarboxylic acid;
aliphatic dicarboxylic acids, such as malonic acid, dimethyl malonic acid, succinic acid, glutaric acid, adipic acid, trimethyl adipic acid, pimelic acid, 2,2-dimethyl glutaric acid, azelaic acid, sebacic acid, fumaric acid, maleic acid, itaconic acid, thiodipropionic acid, and diglycolic acid; and
alicyclic dicarboxylic acids, such as 1,3-cyclopentane dicarboxylic acid, 1,2-cyclohexane dicarboxylic acid, 1,3-cyclopentane dicarboxylic acid, 1,4-cyclohexane dicarboxylic acid, 2,5-norbornane dicarboxylic acid, and adamantane dicarboxylic acid.

These may be used each alone, or two or more of them may be used in combination.

Among others, from the standpoint of conferring cohesion, they preferably contain aromatic dicarboxylic acids, and especially preferably contain terephthalic acid or isophthalic acid.

<polyalcohol>

Examples of polyalcohols include:

aliphatic diols, such as ethylene glycol, diethylene glycol, triethylene glycol, propylene glycol, dipropylene glycol, 1,3-propanediol, 2,4-dimethyl-2-ethylhexane-1,3-diol, 2-methyl-1,3-propanediol, 2,2-dimethyl-1,3-propanediol(neopentylglycol), 2-ethyl-2-butyl-1,3-propanediol, 2-ethyl-2-isobutyl-1,3-propanediol, 1,3-butanediol, 1,4-butanediol, 1,5-pentanediol, 1,6-hexanediol, 3-methyl-1,5-pentanediol, 2,2,4-trimethyl-1,6-hexanediol, and polytetramethylene glycol;
alicyclic diols, such as 1,2-cyclohexane dimethanol, 1,3-cyclohexane dimethanol, 1,4-cyclohexane dimethanol, spiroglycol, tricyclodecane dimethanol, adamantane diol, and 2,2,4,4-tetramethyl-1,3-cyclobutanediol; and
aromatic diols, such as 4,4'-thiodiphenol, 4,4'-methylenediphenol, 4,4'-dihydroxybiphenyl, o-, m- and p-dihydroxybenzenes, 2,5-naphthalene diol, p-xylene diol, and ethylene oxides thereof, and propylene oxide adducts.

These may be used each alone, or two or more of them may be used in combination.

Among others, they preferably contain aliphatic diols or alicyclic diols, and more preferably polytetramethylene glycol, neopentyl glycol, or cyclohexane dimethanol.

<cross-linking agent>

As the cross-linking agent, without any particular limitation, those which are known can be used, e.g., polyvalent isocyanurates, polyfunctional isocyanates, polyfunctional melamine compounds, polyfunctional epoxy compounds, polyfunctional oxazoline compounds, polyfunctional aziridine compounds, and metal chelate compounds. In particular, from the standpoints of transparency of the resultant adhesive layer and achieving an elastic modulus that is suitable as an adhesive layer, an isocyanate-based cross-linking agent is preferably used.

An isocyanate-based cross-linking agent is meant to be a compound that includes two or more isocyanate groups (including isocyanate regenerative functional groups in which the isocyanate group is temporarily protected with a blocking agent or through oligomerization, etc.) within one molecule.

Isocyanate-based cross-linking agents include: aromatic isocyanates such as tolylene diisocyanate and xylene diisocyanate; alicyclic isocyanates such as isophorone diisocyanate; aliphatic isocyanates such as hexamethylene diisocyanate; and the like.

More specifically, examples may be: lower aliphatic polyisocyanates such as butylene diisocyanate and hexamethylene diisocyanate; alicyclic isocyanates such as cyclopentylene diisocyanate, cyclohexylene diisocyanate, and isophorone diisocyanate; aromatic diisocyanates such as 2,4-tolylene diisocyanate, 4,4'-diphenylmethane diisocyanate, xylylene diisocyanate, and polymethylene polyphenylisocyanate; isocyanate adducts such as trimethylolpropane/tolylene diisocyanate trimer adduct (manufactured by Tosoh Corporation, product name: Coronate L), trimethylolpropane/hexamethylene diisocyanate trimer adduct (manufactured by Tosoh Corporation, product name: Coronate HL), isocyanurate of hexamethylene diisocyanate (manufactured by Tosoh Corporation, product name: Coronate HX); trimethylolpropane adduct of xylylene diisocyanate (manufactured by Mitsui Chemicals, Inc., product name: D110N), trimethylolpropane adduct of hexamethylene diisocyanate (manufactured by Mitsui Chemicals, Inc., product name: D160N); polyether polyisocyanate, polyester polyisocyanate, and adducts of these with various polyols, polyisocyanates polyfunctionalized with isocyanurate bonds, biuret bonds, allophanate bonds, or the like, and so on. Use of aliphatic isocyanates is more preferable because an adhesive layer having a high gel fraction can be obtained with a small amount of cross-linking agent.

Each isocyanate-based cross-linking agent may be used alone, or two or more of them may be used in a mixture. The lower limit of the blended amount of the isocyanate-based cross-linking agent is, with respect to 100 mass parts of polyester resin, 6 mass parts or more, preferably 7 mass parts or more, 8 mass parts or more, 9 mass parts or more, or 10 mass parts or more, whereas the upper limit of the blended amount of the isocyanate-based cross-linking agent is 20 mass parts or less, and preferably 15 mass parts or less. These ranges allow for restraining the adhesive layer from penetrating into the dents of the concavo-convex structure over time, while providing a good adhesive strength with respect to a surface having a concavo-convex structure.

<cross-linking catalyst>

Examples of organic aluminum compounds include aluminum trisacetylacetonate, and aluminum trisethylacetoacetate, diisopropoxyaluminum ethylacetoacetate.

Examples of organic iron compounds include acetylacetone-iron complexes.

Examples of organic zirconium compounds include zirconium tetraacetylacetonate.

These may be used each alone, or two or more of them may be used in combination as necessary.

Use of a cross-linking catalyst can increase the cross-linking rate and reduce the production lead time.

<method of forming adhesive layer>

As the method of forming the adhesive layer, known methods can be adopted. For example, the following method is possible. First, an adhesive composition (or a solution containing an adhesive composition) is introduced (applied) onto a supporting body (substrate), and dried as necessary, thereby forming an adhesive composition layer. Typically, an adhesive composition solution containing a polyester resin, a cross-linking agent, a cross-linking catalyst, and a solvent is applied onto the substrate, thereby forming an adhesive composition solution layer on the substrate; and then the solvent in the adhesive composition solution layer is removed to obtain an adhesive composition layer. Next, the adhesive composition layer is subjected to a cross-linking treatment (e.g., a heat treatment), thereby allowing the polyester resin in the adhesive composition layer to be cross-linked by the cross-linking agent, whereby an adhesive layer having a cross-linked structure is formed. In this manner, the adhesive layer is formed on the substrate, whereby a multilayered body having the substrate and the adhesive layer is obtained. As the substrate, for example, a substrate having release-treated principal face, e.g., a release liner, may be used. An adhesive layer that is formed on a release liner by the aforementioned method may be moved (transferred) onto a supporting body (or another release liner).

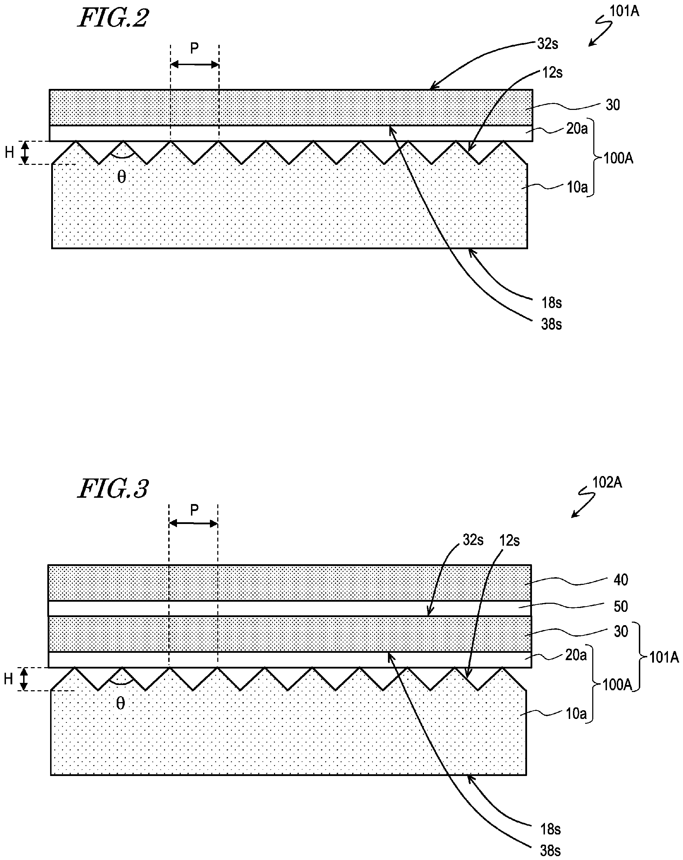

Without limitation, any known matter can be used as the supporting body (substrate), e.g., a plastic film or a porous material. The supporting body may be a second optical sheet that is included in an optical stack according to the present invention (e.g., a second optical sheet **30** included in an optical stack **101A** shown in FIG. **2** described later), for example.

For the supporting body (substrate), as necessary, various additives such as UV absorbers, photostabilizers, antioxidants, fillers, pigments and dyes, which are usually used in supporting bodies for adhesive tapes, can be used.

The surface of the supporting body (substrate) can be given a common surface treatment to improve adhesion with respect to the adhesive layer, if necessary. For example, it may be subjected to an oxidation treatment by chemical or physical methods, e.g., chromate treatment, ozone exposure, flame exposure, high-voltage electric shock exposure, ionizing radiation treatment, etc., or it may be coating-treated with a primer. The principal face on the adhesive layer side of the supporting body (substrate) may be coating-treated with a release agent or the like (release treatment), in order to provide releasability between itself and any of various adhesive layers to be formed on the supporting body (substrate). Although release agent is not particularly limited, silicone-based release agents, fluorine-based release agents, long-chain alkyl-based release agents, and fatty acid amide-based release agents may be used, for example.

The thickness of the supporting body (substrate) may be appropriately chosen depending on its material, form, etc.

As the release liner, those which are known may be used as appropriate, without limitation. For example, what is obtained by forming a release coating layer on at least one side of a base (base for the release liner). The base for the release liner may be in either single-layer or multilayer form.

As the base for the release liner, various thin materials may be used, e.g., a plastic film, paper, a foam material, or a metal foil, which may preferably be a plastic film. Examples of raw materials of the plastic film include polyesters, e.g., polyethylene terephthalate, polyolefins, e.g., polypropylene or ethylene-propylene copolymers, and thermoplastic resins, e.g., polyvinyl chloride. The thickness of the base for the release liner may be appropriately chosen depending on the purpose.

Known methods can be adopted as the method of applying the adhesive composition (or adhesive composition solution) onto the substrate. Examples thereof include roll coating, gravure coating, reverse roll coating, roll brush coating, air knife coating, spray coating, extrusion coating with a die coater, and so on.

<optical stack>

With reference to the drawings, optical stack that include an adhesive layer according to an embodiment of the present invention will be described.

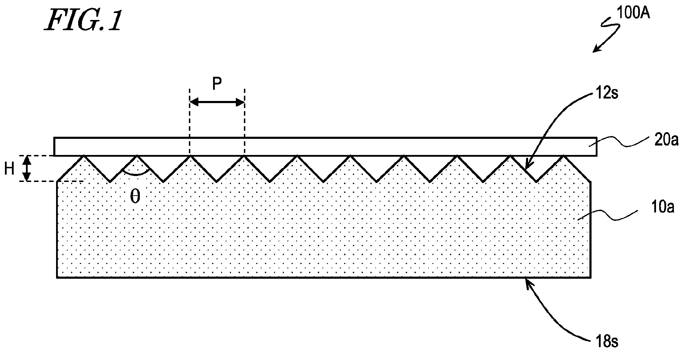

FIG. **1** shows a schematic cross-sectional view of an optical stack **100A** according to an embodiment of the present invention.

As shown in FIG. **1,** the optical stack **100A** includes: a first optical sheet (which herein is a prism sheet) **10a** that includes a first principal face (which herein is a prism surface) **12s** having a concavo-convex structure and a second principal face **18s** at an opposite side from the first principal face **12s;** and an adhesive layer **20a** that is disposed on the first principal face **12s** of the first optical sheet **10a.** The adhesive layer **20a** is an adhesive layer according to an embodiment of the present invention as aforementioned. In other words, the adhesive layer **20a** is formed by cross-linking an adhesive composition containing: a polyester resin that is a copolymer of a polycarboxylic acid and a polyalcohol; a cross-linking agent; and at least one cross-linking catalyst selected from the group consisting of an organic zirconium compound, an organic iron compound, and an organic aluminum compound, the adhesive layer having a gel fraction of 40% or more after being retained at a temperature of 85°C and a relative humidity of 85% for 300 hours, and having a 180° peel adhesive strength of 100 mN/20 mm or more with respect to a PMMA film. The adhesive layer **20a** is in contact with the first principal face **12s** of the first optical sheet **10a.** For simplicity, the figure illustrates the surface of the adhesive layer **20a** to be only in contact with the tips of the bumps of the concavo-convex structure of the first principal face **12s** of the first optical sheet **10a,** while no adhesive layer **20a** exists within the dents. Without limitation to this, however, the adhesive layer **20a** may be disposed so as to fill portions of the dents of the concavo-convex structure of the first principal face **12s** of the first optical sheet **10a** (i.e., so that portions of the adhesive layer **20a** exist within the dents of the concavo-convex structure).

Without being limited to a prism sheet, the first optical sheet **10a** may be any other optical sheet (e.g., a microlens sheet). The pitch **P,** height **H,** and vertex angle θ of the concavo-convex structure of the first principal face **12s** may be appropriately set in accordance with the form and application of the optical stack, for example.

The optical stack **100A** can be produced by attaching the adhesive layer **20a,** which is formed by the aforementioned method, onto the surface **12s** of the first optical sheet **10a** featuring a concavo-convex structure, by using a roll-to-roll method, for example. From the standpoint of mass producibility, the optical stack **100A** is preferably produced in roll-to-roll fashion.

FIG. **2** shows a schematic cross-sectional view of an optical stack **101A** according to an embodiment of the present invention. As shown in FIG. **2,** the optical stack **101A** includes: the optical stack **100A;** and a second optical sheet **30** that is disposed at an opposite side of the adhesive layer **20a** from the first optical sheet **10a.**

The second optical sheet **30** has a principal face **38s** at a side closer to the adhesive layer **20a** and a principal face **32s** at an opposite side from the principal face **38s**. The principal face **38s** is a flat surface. Depending on the purpose, any suitable material may be adopted for the second optical sheet **30**. The material of the second optical sheet **30** may for example be a light-transmitting thermoplastic resin, and more specifically a film made of a (meth) acrylic resin such as polymethyl methacrylate (PMMA), or a polycarbonate (PC)-based resin or the like.

The optical stack **101A** is produced by, for example, producing a first multilayered body in which the first optical sheet **10a** and the adhesive layer **20a** are stacked, and then attaching together the first multilayered body and the second optical sheet **30** by roll-to-roll method, for example. Alternatively, the optical stack **101A** may be produced by producing a second multilayered body in which the second optical sheet **30** and the adhesive layer **20a** are stacked, and then attaching together the second multilayered body and the first optical sheet **10a** by roll-to-roll method, for example.

FIG. 3 shows a schematic cross-sectional view of an optical stack **102A** according to an embodiment of the present invention. As shown in FIG. **3,** the optical stack **102A** includes: an optical stack **101A**; and a third optical sheet **40** that is disposed at an opposite side of the second optical sheet **30** of the optical stack **101A** from the adhesive layer **20a**. The third optical sheet **40** is disposed on the principal face **32s** of the second optical sheet **30** at an opposite side from the adhesive layer **20a**, via an adhesive layer **50**, for example. The adhesive layer **50** is an adhesive layer according to an embodiment of the present invention as aforementioned, for example. Rather than being an adhesive layer according to an embodiment, the adhesive layer **50** may be formed by using any known adhesive for optical uses. The third optical sheet **40** may include a diffusion plate, a light guide plate, or the like, for example. A plurality of third optical sheets **40** may be provided.

Embodiments of the present invention are not limited to the examples described above. An adhesive layer according to an embodiment of the present invention may be attached onto a surface of an optical sheet having a concavo-convex structure, in order to allow the optical sheet to be attached to an optical component or an optical device. An optical device according to an embodiment of the present invention includes any of the aforementioned optical stacks. For example, an optical device according to an embodiment of the present invention includes: the optical stack **101A**; and an optical component that is disposed at an opposite side of the second optical sheet **30** of the optical stack **101A** from the adhesive layer **20a.**

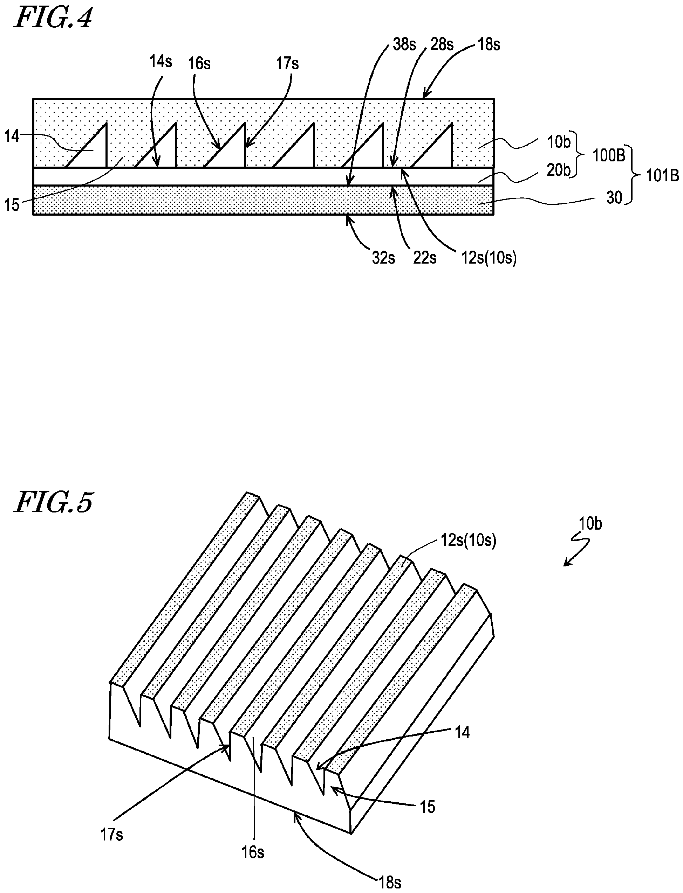

Next, with reference to FIG. **4** to FIG. **6,** optical stacks **100B** and **101B** according to another embodiment of the present invention will be described. For component elements that have substantially the same functions as in the previous embodiment, the description of the previous embodiment applies unless otherwise specified. The optical stack **100B** functions as a light distribution structure that is described in Patent Document 2 or 3. The entire disclosure of Patent Documents 2 and 3 is incorporated herein by reference.

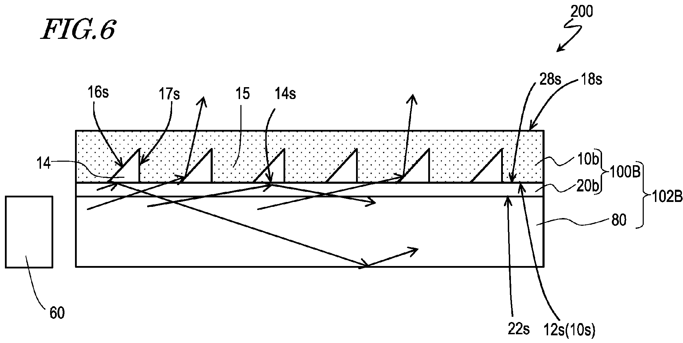

FIG. **4** is a schematic cross-sectional view of the optical stacks **100B** and **101B,** illustrating a state where a first optical sheet **10b** has been adhesively bonded to the surface **38s** of the second optical sheet **30** via an adhesive layer **20b**. FIG. **5** is a schematic perspective view of the optical sheet **10b** included in the optical stack **100B**. FIG. **6** is a schematic cross-sectional view of an illumination device **200** that includes an optical stack **102B** and a light source **60,** where ray trajectories are schematically shown.

FIG. **4** and FIG. **5** are referred to. The optical stack **100B** includes: the first optical sheet **10b** that includes a first principal face **12s** having a concavo-convex structure and a second principal face **18s** at an opposite side from the first principal face **12s**; and the adhesive layer **20b** that is disposed on the first principal face **12s** of the first optical sheet **10b**. The adhesive layer **20b** is an adhesive layer according to an embodiment of the present invention as aforementioned. The optical stack **101B** includes: the optical stack **100B**; and the second optical sheet **30** disposed at an opposite side of the adhesive layer **20b** from the first optical sheet **10b**. Herein, the concavo-convex structure of the first principal face **12s** of the first optical sheet **10b** includes a plurality of dents **14,** such that the surface of the adhesive layer **20b** and the first principal face **12s** of the first optical sheet **10b** define a plurality of spaces **14** (indicated with the same reference numerals as the dents **14**) within the plurality of dents **14**. The adhesive layer **20b** is a necessary component element for defining the spaces **14** in the optical stack **100B,** and is a part of the optical stack **100B.**

The concavo-convex structure of the first optical sheet **10b** includes flat portions **10s** which are in contact with the adhesive layer **20b**. The concavo-convex structure may include a plurality of bumps **15** with a trapezoidal cross section, for example. Because the concavo-convex structure includes the flat portions **10s** being in contact with the adhesive layer **20b,** the concavo-convex structure of the first optical sheet **10b** makes it more difficult for the adhesive layer **20b** to penetrate into the dents than in the concavo-convex structure of the prism surface **12s** of the prism sheet **10a** shown in FIG. **1.** Therefore, by using the aforementioned adhesive layer, it is possible to obtain an optical stack **100B** in which penetration of the adhesive layer **20b** into the plurality of spaces **14** is reduced and in which change over time in its degree of penetration is also reduced.

The first optical sheet **10b** may be produced by using similar materials to those of known prism sheets or microlens sheets, and by using similar methods. The size and shape of the concavo-convex structure of the first optical sheet **10b** may be changed as appropriate (for example, Patent Document 3). However, as described earlier, the first optical sheet **10b** differs from known prism sheets or microlens sheets in that it needs to be adhesively bonded to the adhesive layer **20b** before it can function as the optical stack **100B** (light distribution control structure) in which the spaces **14** are defined.

As shown in FIG. **4,** in the optical stack **101B,** the second optical sheet **30** is disposed so as to be adhesively bonded, at its surface **38s,** to a surface **22s** of the adhesive layer **20b** at an opposite side from the first optical sheet **10b.** Depending on the purpose, any suitable material may be adopted for the second optical sheet **30.** The material of the second optical sheet **30** may for example be a light-transmitting thermoplastic resin, and more specifically a film made of a (meth)acrylic resin such as polymethyl methacrylate (PMMA), or a polycarbonate (PC)-based resin, for example.

The optical stack **100B** to function as a light distribution control structure is used for the illumination device **200** as shown in FIG. **6,** for example. The optical stack **102B** includes: the optical stack **100B;** and a light guide plate **80** disposed at an opposite side of the adhesive layer **20b** of the optical stack **100B** from the first optical sheet **10b.** The light guide plate **80** is adhesively bonded to a surface **22s** of the adhesive layer **20b** at an opposite side from the first optical sheet **10b.** The light source (e.g., an LED) **60** is disposed so that light therefrom is incident on a light-receiving surface of the light guide plate **80.** Rays that are led into the light guide plate **80** are, as indicated by arrows in FIG. **6,** undergo total internal reflection (Total Internal Reflection: TIR) at interfaces **16s** and interfaces **14s** created by the spaces **14.** Rays that have undergone total reflection at the interfaces **14s** (i.e., the surface **28s** of the adhesive layer **20b** closer to the first optical sheet **10b)** are guided in the light guide plate **80** and the adhesive layer **20b,** whereas rays that have undergone total reflection at the slopes **16s** are emitted outside from the surface **18s** of the optical stack **100B.** By adjusting the shape, size, density of placement, etc., of the spaces **14,** it is possible to adjust the distribution (intensity distribution) of rays which are emitted from the optical stack **100B.** Preferably, refractive indices of the light guide plate **80,** the adhesive layer **20b,** and the first optical sheet **10b** are essentially equal to one another. The difference in refractive index between the light guide plate **80** and the adhesive layer **20b** (absolute value) and the difference in refractive index between the adhesive layer **20b** and the first optical sheet **10b** (absolute value) are, each independently, preferably e.g. 0.20 or less, more preferably 0.15 or less, and still more preferably 0.1 or less.

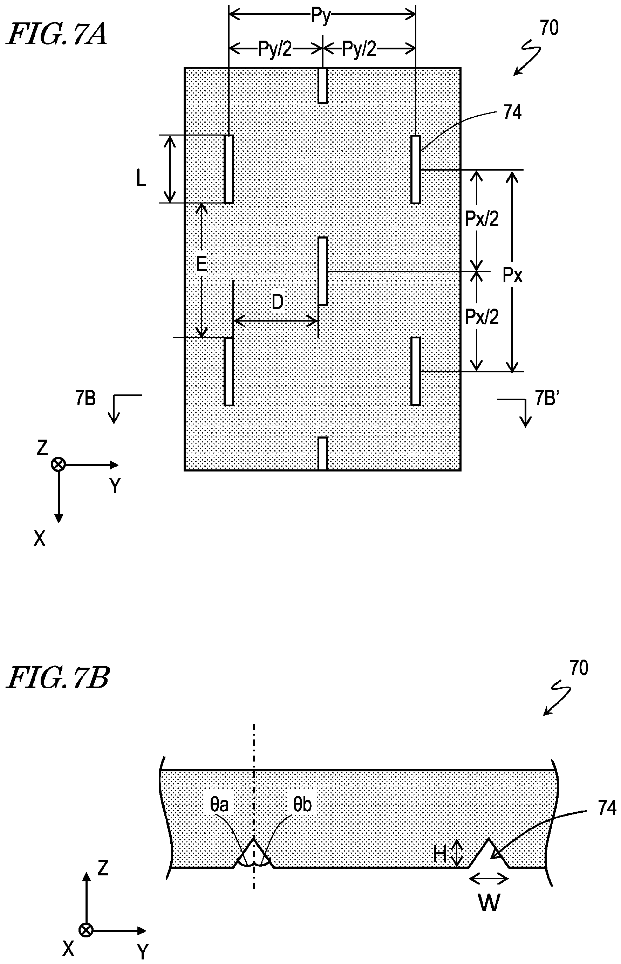

The spaces **14** of the optical stack **100B** are defined by the surfaces **16s** and the surfaces **17s,** which are parts of the first principal face **12s** of the first optical sheet **10b,** and the surface **28s** of the adhesive layer **20b.** Although an example is illustrated where the surfaces **16s** are slanted (by more than 0° but less than 90°) with respect to the sheet plane (i.e., the horizontal direction in the figure) and the surfaces **17s** are essentially perpendicular to the sheet plane, this is not a limitation, and various modifications may be made (see Patent Documents 2 and 3). Although an example is illustrated where each bump **15** has a trapezoidal cross-sectional shape, the shape of the bump **15** is not limited to what is shown, and various modifications may be made. By adjusting the shape, size, etc., of the bumps **15,** it is possible to adjust the shape, size, density of placement, etc., of the spaces **14.** For example, Patent Document 2 describes an example of a multilayered body which includes a plurality of spaces inside. Another example of the first optical sheet **10b** may be a textured film **70** shown in FIG. **7A** and FIG. **7B.** As will be described later, the textured film **70** includes a plurality of dents **74** with a triangular cross section on its surface, such that spaces **74** created by the dents **74** have a triangular cross-sectional shape.

Regarding the plurality of internal spaces **14** and **74** of the light distribution control structure, in a plan view of the first optical sheet **10b** from the normal direction of its principal face, a ratio (occupied area percentage) of the area of the plurality of internal spaces **14** or **74** to the area of the first optical sheet **10b** is preferably 1% or more, from the standpoint of obtaining a good luminance. The occupied area percentage of the internal spaces **14** or **74** is to be appropriately selected in accordance with the intended application; for example, in applications where transparency is needed, it is preferably not less than 1% and not more than 10%, and in applications where a higher luminance is required, for example, it is more preferably not less than 30% and not more than 80%. Note that the occupied area percentage of the internal spaces **14** and **74** may be uniform, or the occupied area percentage may increase with increasing distance from the light source to ensure that luminance will not decrease with increasing distance from the light source (e.g., the light source **60** in FIG. **6).**

In the textured film **70,** the size (length **L,** width **W:** see FIG. **7A** and FIG. **7B)** of the internal spaces **74** is such that the length **L** is preferably not less than 10 $\mu$m and not more than 500 um, and the width **W** is preferably not less than 1 um and not more than 100 $\mu$m, for example. From the standpoint of light extraction efficiency, the height **H** is preferably not less than 1 um and not more than 100 um. The plurality of internal spaces **14** and **74** are distributed preferably discretely and uniformly. For example, they are disposed preferably periodically as shown in FIG. **7A.** The pitch **Px** is preferably e.g. not less than 10 um and not more than 500 um, and the pitch **Py** is preferably e.g. not less than 10 um and not more than 500 $\mu$m.

[Examples]

Hereinbelow, experimental examples (Examples and Comparative Examples) will be described.

[Example 1]

(1) preparation of polyester resin A

An agitator, a thermometer, a nitrogen inlet tube, and a cooling tube with a trap were attached to a four-necked separable flask. In this flask, 47 g of terephthalic acid (molecular weight: 166) and 45 g of isophthalic acid (molecular weight: 166) as carboxylic acid components, 115 g of polytetramethylene glycol (molecular weight: 566), 4 g of ethylene glycol (molecular weight: 62), 16 g of neopentyl glycol (molecular weight: 104), and 23 g of cyclohexane dimethanol (molecular weight: 144) as alcohol components, and 0.1 g of tetrabutyltitanate as a catalyst were placed. While the inside of the flask was filled with a nitrogen gas, with stirring, the temperature was elevated to 240°C, and retained at 240°C for 4 hours.

Thereafter, the nitrogen inlet tube and the cooling tube with a trap were removed, and a vacuum pump was installed instead, and, during stirring in a reduced pressure ambient (0.002 MPa), the temperature was elevated to 240°C and retained at 240°C. The reaction was continued for about 6 hours, whereby polyester resin A was obtained. Polyester resin A was obtained by polymerizing the aforementioned monomer without using a solvent. In a GPC measurement, polyester resin A had a weight average molecular weight (Mw) of 59,200. The composition and the weight average molecular weight (Mw) of the polyester resin used in each experimental example are shown together in Table 1 below. While dissolving in ethyl acetate, the prepared polyester resin A was taken out of the flask, thus preparing a polyester resin A solution having a solid concentration of 50 mass%.

(2) preparation of adhesive composition solution

To 100 mass parts in solid content of the polyester resin A solution prepared as above, 0.07 mass parts of zirconium tetraacetylacetonate (product name "Orgatix ZC-162", manufactured by Matsumoto Fine Chemical Co., Ltd.; "Orgatix" is a registered trademark; hereinafter may be referred to as "ZC-162") as a cross-linking catalyst, 12 mass parts of isocyanurate of hexamethylene diisocyanate (product name "Coronate HX", manufactured by Tosoh Corporation; "Coronate" is a registered trademark; hereinafter may be referred to as "Coronate HX") as a cross-linking agent, and 20 mass parts of acetylacetone as a catalytic reaction inhibitor were blended; to this, ethyl acetate was further added to result in a solid concentration of 20 mass%, thus preparing an adhesive composition solution.

(3) production of adhesive sheet

On one side of a polyethylene terephthalate (PET) film (product name: "MRF38", manufactured by Mitsubishi Chemical Corporation) having a thickness of 38 μm and having been silicone release-treated, the adhesive composition solution was applied to form an adhesive composition solution layer. The application of the adhesive composition solution layer was performed so that the adhesive layer had a thickness of 7 μm after the below-described treatment step at 40°C for 3 days. By drying the adhesive composition solution layer at 150°C for 1 minute, the solvent in the adhesive composition solution layer was removed, whereby an adhesive composition layer was obtained. Next, the adhesive composition layer was attached onto a release-treated surface of a 38 um polyethylene terephthalate (PET) film (product name: "MRE38", manufactured by Mitsubishi Chemical Corporation) having been silicone release-treated, and this was left at 40°C for 3 days. By treating the adhesive composition layer at 40°C for 3 days, the polyester resin A in the adhesive composition layer was cross-linked by the cross-linking agent, thus forming an adhesive layer. In this manner, an adhesive sheet (multilayered body) having a layered structure of PET film/adhesive layer/PET film was produced. Although the cross-linking reaction of polyester resin A may partially occur also in the step of treating the adhesive composition solution layer at 150°C for 1 minute, a large part of the cross-linking reaction occurs in the subsequent step of heat treatment at 40°C for 3 days. In Table 2, the "thickness" refers to the thickness of the adhesive layer, i.e., thickness after being treated at 40°C for 3 days.

(4) production of concavo-convex textured film

A concavo-convex textured film was produced according to a method described in Japanese National Phase PCT Laid-Open Publication No. 2013-524288. Specifically, the surface of a polymethyl methacrylate (PMMA) film was coated with a lacquer (manufactured by Sanyo Chemical Co., FINECURE RM-64: an acrylate-based photocurable resin); an optical pattern was embossed on the film surface including the lacquer; and thereafter the lacquer was cured (conditions of ultraviolet irradiation: D bulb, 1000 mJ/cm$^2$, 320 mW/cm$^2$) to produce the concavo-convex textured film of interest. The concavo-convex textured film had a total thickness of 130 um, and a haze value of 0.8%.

FIG. **7A** shows a plan view of a portion of the resultant concavo-convex textured film **70** as viewed from the concavo-convex surface side. FIG. **7B** shows a cross-sectional view of the concavo-convex textured film at **7B-7B'** in FIG. **7A**. A plurality of dents **74** having a length **L** of 80 um, a width **W** of 14 um, and a depth **H** of 10 μm and having a triangular cross section were disposed at intervals of **E** (155 um) along the X axis direction. Furthermore, patterns of such dents **74** were disposed at intervals of **D** (100 um) along the Y axis direction. The dents **74** had a pitch **Px** of 235 μm (Px=L+E) along the X axis direction and a pitch **Py** of 114 μm (Py=W+D) along the Y axis direction. The dents **74** had a density of 3612/cm² on the surface of the concavo-convex textured film. In FIG. **7B**, θ**a** and θ**b** were both 41°. The dents **74** had an occupied area percentage of 4.05% in a plan view of the film as seen from the concavo-convex surface side.

(5) production of optical stack

From the adhesive sheet obtained in (3) above, one of the release-treated PET films was peeled off, and the exposed adhesive layer surface was attached onto an acrylic resin film (thickness: 30 um), and the other separator (PET film) was further peeled off. This was attached to the concavo-convex textured film of (4), whereby an optical stack having a layered structure of acrylic resin film/adhesive layer/concavo-convex textured film was obtained.

[Example 2]

To 100 mass parts in solid content of the polyester resin A solution prepared in a similar manner to Example 1, 30 mass parts of terpene phenol-based adhesive-enhancing resin (manufactured by YASUHARA CHEMICAL CO.,LTD., "YS POLYSTER T130") as an additive was blended, whereby polyester resin B solution was obtained.
To 100 mass parts in solid content of the polyester resin B solution, 0.066 mass parts of acetylacetone metal complex iron compound (product name: "NACEM Iron (III)", manufactured by NIHON KAGAKU SANGYO CO.,LTD.; "NACEM" is a registered trademark; hereinafter may be referred to as "NACEM") as a cross-linking catalyst and 5 mass parts of trimethylolpropane/tolylene diisocyanate trimer adduct (product name "Coronate L", manufactured by Tosoh Corporation; hereinafter may be referred to as "Coronate L") as a cross-linking agent were blended; to this, ethyl acetate was further added to result in a solid concentration of 20 mass%, thus preparing an adhesive composition solution.
Except for preparing the adhesive composition solution in the aforementioned manner, an adhesive sheet and an optical stack were produced similarly to Example 1. However, the thickness of the adhesive layer was adjusted so as to result in a value described in Table 2.

[Example 3]

To 100 mass parts in solid content of the polyester resin C (manufactured by Mitsubishi Chemical Corporation, "Nichigo-POLYESTER NP-110S50EO"; "Nichigo-POLYESTER" is a registered trademark) containing an aromatic dicarboxylic acid, aliphatic dicarboxylic acid, and aliphatic diol as monomer components, 0.02 mass parts of zirconium tetraacetylacetonate (product name "Orgatix ZC-700", manufactured by Matsumoto Fine Chemical Co., Ltd.; hereinafter may be referred to as "ZC-700") as a cross-linking catalyst and 1 mass part of trimethylolpropane/tolylene diisocyanate trimer adduct (product name "Coronate L", manufactured by Tosoh Corporation) as a cross-linking agent were blended; to this, ethyl acetate was further added to result in a solid concentration of 20 mass%, thus preparing an adhesive composition solution. Note that polyester resin C had an ingredient composition as shown in Table 1.
Except for preparing the adhesive composition solution in the aforementioned manner, an adhesive sheet and an optical stack were produced similarly to Example 1. However, the thickness of the adhesive layer was adjusted so as to result in a value described in Table 2.

[Comparative Example 1]

To 100 mass parts in solid content of the polyester resin D (manufactured by TOYOBO CO., LTD."VYLON 550", "VYLON " is a registered trademark) containing an aromatic dicarboxylic acid, aliphatic dicarboxylic acid, and aliphatic diol as monomer components, 0.07 mass parts of zirconium tetraacetylacetonate (product name "Orgatix ZC-162", manufactured by Matsumoto Fine Chemical Co., Ltd.) as a cross-linking catalyst and 3 mass parts of trimethylolpropane/tolylene diisocyanate trimer adduct (product name "Coronate L", manufactured by Tosoh Corporation) as a cross-linking agent were blended; to this, ethyl acetate was further added to result in a solid concentration of 20 mass%, thus preparing an adhesive composition solution. Note that polyester resin D had an ingredient composition as shown in Table 1.
Except for preparing the adhesive composition solution in the aforementioned manner, an adhesive sheet and an optical stack were produced similarly to Example 1. However, the thickness of the adhesive layer was adjusted so as to result in a value described in Table 2.

[Comparative Example 2]

To 100 mass parts in solid content of the polyester resin C (manufactured by Mitsubishi Chemical Corporation, "Nichigo-POLYESTER NP-110S50EO") containing an aromatic dicarboxylic acid, aliphatic dicarboxylic acid, and aliphatic diol as monomer components, 0.02 mass parts of zirconium tetraacetylacetonate (product name "Orgatix ZC-700", manufactured by Matsumoto Fine Chemical Co., Ltd.) as a cross-linking catalyst and 10 mass parts of isocyanurate of hexamethylene diisocyanate (product name "Coronate HX", manufactured by Tosoh Corporation) as a cross-linking agent were blended; to this, ethyl acetate was further added to result in a solid concentration of 20 mass%, thus preparing an adhesive composition solution.

Except for preparing the adhesive composition solution in the aforementioned manner, an adhesive sheet and an optical stack were produced similarly to Example 1. However, the thickness of the adhesive layer was adjusted so as to result in a value described in Table 2.

[Comparative Example 3]

To 100 mass parts in solid content of the polyester resin A solution, without using a cross-linking catalyst, 2 mass parts of isocyanurate of hexamethylene diisocyanate (product name "Coronate HX", manufactured by Tosoh Corporation) as a cross-linking agent was blended; to this, ethyl acetate was further added to result in a solid concentration of 20 mass%, thus preparing an adhesive composition solution.

Except for preparing the adhesive composition solution in the aforementioned manner, an adhesive sheet and an optical stack were produced similarly to Example 1. However, the thickness of the adhesive layer was adjusted so as to result in a value described in Table 2.

[polyester resin]

The compositions and weight average molecular weights (Mw) of polyester resins A to D used in Examples 1 to 3 and Comparative Examples 1 to 3 are shown in Table 1. The weight average molecular weights (Mw) of polyester resins A to D were obtained through GPC.

[Table 1]

| blended mass(g) | | polyester resin A | | polyester resin B | | polyester resin C | | polyester resin D | |
|---|---|---|---|---|---|---|---|---|---|
| main polymer unit | aromatic dicarboxylie acid | isophthalic acid(IP) | 45 | isophthalic acid(IP) | 45 | isophthalic acid(IP) | 28 | isophthalic acid (IP) | 32 |
| | | terephthalic acid(TP) | 47 | terephthalic acid(TP) | 47 | terephthalic acid(TP) | 0.3 | terephthali c acid (TP) | 49 |
| | aliphatic dicarboxylic acid | | | | | sebacic acid (SB) | 137 | azelaic acid | 88 |
| | aliphatic diol | polytetrameth ylene glycol (PTMG) | 115 | polytetrameth ylene glycol (PTMG) | 115 | neopentyl glycol (NPG) butanediol (BD) | 51 31 | ethylene glycol (EG) neopentyl glycol (NPG) | 34 47 |
| | | ethylene glycol (EG) neopentyl glycol (NPG) | 4 16 | ethylene glycol (EG) neopentyl glycol(NPG) | 4 16 | hexanediol (HD) | 2 | | |
| | alicyclic diol | cyclohexane dimethanol (CH) | 23 | cyclohexane dimethanol (CH) | 23 | | | | |
| others (additive, etc.) | | - | | terpene phenolic resin | | compound(s) with carbodiimide structure | | - | |
| weight average molecular weight (Mw) | | 59,200 | | 61,800 | | 61,000 | | 55,200 | |

[evaluation method]

The evaluation method for each evaluation item is as follows. Results of evaluation are shown in Table 2.

<180° peel adhesive strength with respect to polymethyl methacrylate (PMMA)>

For each of Examples 1 to 3 and Comparative Examples 1 to 3, one of the release-treated PET films was peeled off from the resultant adhesive sheet, and the exposed adhesive layer surface was attached onto a polyethylene terephthalate (PET) film (product name: "Lumirror S-10", manufactured by Toray Industries, Inc.) having a thickness of 25 um, whereby a test piece was obtained.

The test piece was cut into 20 mm in width, and the other release-treated PET film was peeled off, and the exposed adhesive layer surface was attached onto a polymethyl methacrylate (PMMA) plate (thickness 2 mm, product name: "Acrylite (Shinkolite)", manufactured by Mitsubishi Chemical Corporation). Using this as a test piece, an adhesive strength (mN/20 mm) with respect to a PMMA plate was measured. The pressing when attaching together with a PMMA plate was achieved by moving a 2 kg roller in one back-and-forth travel. After 30 minutes from attaching together, the 180° peel adhesive strength was measured under the following conditions, by using a tensile/compression tester (machine name: "AGS-50NX", manufactured by Shimadzu Corporation). Any 180° peel adhesive strength of 100 mN/20 mm or more was judged as "o (Good)", 180° peel adhesive strength less than 100 mN/20 mm was judged as "× (NG)".

Peeling rate: 300 mm/minute
Measurement conditions: temperature: 23±2°C, humidity: 65±5%RH

<measurement of gel fraction>

For each of Examples 1 to 3 and Comparative Examples 1 to 3, about 0.1 g was taken from the adhesive layer of the resultant adhesive sheet and wrapped in a fluoroplastic film (TEMISH NTF-1122, manufactured by Nitto Denko Corporation)(mass: Wa) whose mass had previously been measured. This was tied so that the adhesive would not leak, thereby giving a measurement sample. After measuring its mass (mass: Wb), the measurement sample was placed in a bottle; to this, 40 cc of ethyl acetate was added, and it was left for 7 days. Thereafter, the measurement sample was taken out, and the measurement sample was dried at 130°C for 2 hours. The mass of the dried measurement sample was measured (mass: Wc), and a gel fraction was determined according to the following formula.

$$\texttt{gel fraction [mass\%]}=\{\texttt{(Wc-Wa)/(Wb-Wa)}\}\times 100$$

The determined gel fraction was judged according to the following criteria.

◎ (Excellent): 70% or more
○ (Good): 40% or more but less than 70%
× (NG): less than 40%

<height of adhesive layer within dents of concavo-convex textured film>

For each of Examples 1 to 3 and Comparative Examples 1 to 3, a cross section (e.g., a cross section in FIG. **7B)** of the concavo-convex textured film **70** of the resultant optical stack was observed, and the height of the adhesive layer existing in the dents **74** (i.e., in regions defined by the dents **74**) was measured. The height of the adhesive layer was measured in the depth direction of the dents **74.** Specifically, first, a 3 mm × 3 mm piece was cut out from the optical stack produced according to each Example and Comparative Example. Thereafter, the test piece having been cut out was embedded in a block of resin (manufactured by ITW Performance Polymers & Fluids, Japan; S-31). After, the sample temperature was stabilized at -80°C so as not to induce changes in shape, a cross-sectional observation sample was produced on a microtome. The sample was observed with a laser microscope (manufactured by KEYENCE CORPORATION; VK-X1000, 1100) to measure the height of the adhesive layer within the dents **74.**
The height of the adhesive layer was judged according to the following criteria.

◎ (Excellent):1 $\mu$m or less
○ (Good): more than 1 $\mu$m but 2 $\mu$m or less
× (NG): more than 2 $\mu$m

Table 2 also shows the ratio (%) of the height of the adhesive layer existing in the dents **74** to the depth **H** of the dents **74** (10 μm). The ratio of the height of the adhesive layer existing in the dents **74** to the depth **H** of the dents **74** was judged according to the following criteria.

◎ (Excellent): 10% or less
∘ (Good): more than 10% but 200 or less
× (NG): more than 200

<evaluation of creep deformation rate>

For each of Examples 1 to 3 and Comparative Examples 1 to 3, a laminate of adhesive layers (thickness 1 mm) was produced as follows. Similarly to the aforementioned adhesive sheet, except that the adhesive layer had a thickness of 10 μm, an adhesive sheet having a layered structure of PET film/adhesive layer (thickness 10 μm)/PET film was produced in four pieces sized 20 cm wide and 30 cm long. A step of stacking multiple adhesive layers from the resultant adhesive sheet and a step of splitting the laminate of adhesive layers into multiple test pieces (i.e., cutting out a plurality of test pieces) were repeated, whereby a laminate of adhesive layers (thickness 1 mm, sized 4 cm × 6 cm) in which a total of 100 adhesive layers (thickness 10 μm) had been stacked was obtained. From the laminates of adhesive layers (thickness 1 mm) obtained as above, cylindrical pieces (height 1 mm) with a diameter of 8 mm were punched out, thus producing test pieces. By using a viscoelasticity measurement device (machine name: "ARES G-2", manufactured by T. A. Instruments Japan, Inc.), a 10000 Pa stress was applied to the aforementioned test pieces for 30 minutes, at a measurement temperature of 50°C, and deformation rates after 1 second and after 30 minutes were measured.
In the present specification, a "creep deformation rate" of the adhesive layer is defined as a "creep deformation rate" that is determined for a laminate of adhesive layers (thickness 1 mm) by the above-described method. According to experimentation by the inventors, the creep deformation rate for a 1 mm thick laminate did not show significant differences between: laminates which were formed by stacking 20 adhesive layers having a thickness of 50 um, laminates which were formed by stacking 100 adhesive layers having a thickness of 10 μm; and laminates which were formed by stacking 200 adhesive layers having a thickness of 5 um. In other words, when the thickness of each adhesive layer composing the laminate is in the range of at least 5 μm or more and yet 50 μm or less, the creep deformation rate of a 1 mm thick laminate does not depend on the thickness of the adhesive layer. According to a study by the inventors, it is considered that the creep deformation rate of a 1 mm thick laminate has an essentially constant value when the thickness of each adhesive layer is 0.1 um or more.

<endurance test in high-temperature and high-humidity environment>

(1) measurement of gel fraction

From the adhesive sheet according to each Example and Comparative Example, a piece that was cut out in a 20 cm × 20 cm size was used as a test piece. The test piece was retained in a testing machine, which was stably at temperature 85°C and a relative humidity 85% (a constant temperature and constant humidity chamber manufactured by Yamato Scientific Co., Ltd.; IH400), for 300 hours. In the testing machine, the test piece was hung with a clip from a shelf in the testing machine, so that the test piece would not be in contact with any metal portion within the testing machine. After 300 hours, the test piece was taken out, and a gel fraction was measured similarly to the above, by using the adhesive layer in the test piece.

(2) height of adhesive layer in dents of concavo-convex textured film

From the optical stack according to each Example and Comparative Example, a piece that was cut out in a 20 cm × 20 cm size was used as a test piece. The test piece was retained in a testing machine, which was stably at temperature 85°C and a relative humidity 85% (a constant temperature and constant humidity chamber manufactured by Yamato Scientific Co., Ltd.; IH400), for 300 hours. In the testing machine, the test piece was hung with a clip from a shelf in the testing machine, so that the test piece would not be in contact with any metal portion within the testing machine. After 300 hours, the test piece was taken out, and a central portion of the test piece was cut out in a 3 mm × 3 mm size. Then, by using the test piece having been cut out, the height of the adhesive layer in the dents of the concavo-convex textured film was measured similarly to the above.
In Table 2, "initial" represents results for the optical stack after being stored in a normal-temperature and normal-humidity environment for 6 hours since production; and "after high-temperature and high-humidity test" represents results of carrying out the aforementioned endurance test for the produced optical stack in the high-temperature and high-humidity environment.

[Table 2]

| | | | Example 1 | | Example 2 | | Example 3 | | Comparative Example 1 | | Comparative Example 2 | | Comparative Example 3 | |
|---|---|---|---|---|---|---|---|---|---|---|---|---|---|---|
| blend | polyester resin | type | polyester resin A | | polyester resin B | | polyester resin C | | polyester resin D | | polyester resin C | | polyester resin A | |
| | | parts | 100 | | 100 | | 100 | | 100 | | 100 | | 100 | |
| | cross-linking catalyst | materia 1 | zirconium | | iron | | zirconium | | zirconium | | zirconium | | - | |
| | | product number | ZC-162 | | NACEM | | ZC-700 | | ZC-162 | | ZC-700 | | - | |
| | | parts | 0.07 | | 0.01 | | 0.02 | | 0.07 | | 0.02 | | - | |
| | cross-linking agent | materia 1 | aliphatic isocyanate | | aromatic isocyanate | | aromatic isocyanate | | aromatic isocyanate | | aliphatic isocyanate | | aliphatic isocyanate | |
| | | product number | Coronate HX | | Coronate L | | Coronate L | | Coronate L | | Coronate HX | | Coronate HX | |
| | | parts | 12 | | 5 | | 1 | | 3 | | 10 | | 2 | |
| | catalytic reaction inhibitor | materia 1 | acetylaceto ne | | | | | | | | | | | |
| | | parts | 20 | | - | | - | | - | | - | | - | |
| thickness of adhesive layer | | [μm] | 7 | | 5 | | 10 | | 5 | | 3 | | 5 | |
| peel adhesive strength | initial | [mN/ 20mm] | ○ | 1,200 | ○ | 1,000 | ○ | 600 | ○ | 2,500 | × | 80 | ○ | 1, 900 |
| height of adhesive layer in dents | initial | [μm] | ◎ | 0.0 | ◎ | 0.0 | ◎ | 0.1 | × | 10 | ◎ | 0.0 | ○ | 0.4 |
| | after high-temperature and high-humidity test | [μm] | ◎ | 0.1 | ◎ | 0.1 | ○ | 0.3 | × | 10 | ◎ | 0.1 | × | 2.1 |
| ratio of height of adhesive layer in dents to depth of dents | initial | [%] | ◎ | 0 | ◎ | 0 | ◎ | 1 | × | 100 | ◎ | 0 | ○ | 4 |
| | after high-temperature and high-humidity test | [%] | ◎ | 1 | ◎ | 1 | ○ | 3 | × | 100 | ◎ | 1 | × | 21 |

| | | | Example 1 | | Example 2 | | Example 3 | | Comparative Example 1 | | Comparative Example 2 | | Comparative Example 3 | |
|---|---|---|---|---|---|---|---|---|---|---|---|---|---|---|
| gel fraction | initial | [mass%] | ◎ | 95 | ◎ | 71 | ◎ | 90 | × | 39 | ◎ | 98 | ○ | 40 |
| | after high-temperature and high-humidity test | [mass%] | ◎ | 90 | ○ | 65 | ◎ | 85 | × | 0 | ◎ | 94 | × | 26 |
| creep deformation rate (after 1 second ) | initial | [%] | 1.18 | | 1.40 | | 1.46 | | - | | - | | - | |
| creep deformation rate (after 30 minutes) | initial | [%] | 1.67 | | 2.10 | | 1.63 | | - | | - | | - | |

Adhesive layers according to Examples 1 to 3 all have a 180° peel adhesive strength of 100 mN/20 mm or more with respect to a PMMA film, thus having good adhesion. Among Examples 1 to 3, the adhesive layers according to Examples 1 and 2 have particularly good adhesion. From the results of Examples 1 to 3, the 180° peel adhesive strength of the adhesive layer with respect to a PMMA film is preferably e.g. 600 mN/20 mm or more, and more preferably e.g. 1000 mN/20 mm or more.

In all of the adhesive layers according to Examples 1 to 3, the adhesive layer having penetrated into the dents of the optical sheet (concavo-convex textured film) had a height of 0.1 μm or less after being retained in a normal-temperature and normal-humidity environment for 6 hours, and had a height as low as 0.3 um or less even after being retained at a temperature of 85°C and a relative humidity of 85% for 300 hours. In terms of a ratio of the height of the adhesive layer within the dents (i.e., within regions defined by the dents) to the depth of the dents, the adhesive layers according to Examples 1 to 3 all had a value of 1% or less after being retained in a normal-temperature and normal-humidity environment for 6 hours, and a value as low as 30 or less even after being retained at a temperature of 85°C and a relative humidity of 85% for 300 hours. In all of the adhesive layers according to Examples 1 to 3, penetration into the dents of the optical sheet and the change over time thereof was reduced in a normal-temperature and normal-humidity environment and also in a high-temperature and high-humidity environment. On the other hand, in the adhesive layers according to Comparative Examples 1 and 3, the height of the adhesive layer within the dents was more than 2 μm (i.e., the ratio of the height of the adhesive layer within the dents to the depth of the dents was more than 200) after being retained at a temperature of 85°C and a relative humidity of 85% for 300 hours; thus, the change over time in their penetration into the dents was not adequately reduced in a high-temperature and high-humidity environment.

All of the adhesive layers according to Examples 1 to 3 had a gel fraction of 40% or more after being retained at a temperature of 85°C and a relative humidity of 85% for 300 hours, and thus the change over time in their degree of penetration into the dents was reduced in a high-temperature and high-humidity environment. On the other hand, the adhesive layers according to Comparative Examples 1 and 3 had a gel fraction less than 40% (26% or less) after being retained at a temperature of 85°C and a relative humidity of 85% for 300 hours, and thus the change over time in their degree of penetration into the dents was not adequately reduced in a high-temperature and high-humidity environment. It can be said that the gel fraction after the adhesive layer is retained at a temperature of 85°C and a relative humidity of 85% for 300 hours has a certain correlation with, when the adhesive layer is attached onto a surface having a concavo-convex structure, the change over time in its degree of penetration into the dents of the concavo-convex structure. From the results of Examples 1 to 3, the gel fraction after the adhesive layer is retained at a temperature of 85°C and a relative humidity of 85% for 300 hours is preferably e.g. 55% or more, more preferably 650 or more, and even more preferably e.g. 85% or more.

All of the adhesive layers according to Examples 1 to 3 had a creep deformation rate of 10% or less when a stress of 10,000 Pa was applied for 1 second at 50°C in a creep test using a rotational rheometer (creep deformation rate A), and had a creep deformation rate of 16% or less when a stress of 10,000 Pa was applied for 30 minutes at 50°C in a creep test using a rotational rheometer (creep deformation rate B). As described above, in all of the adhesive layers according to Examples 1 to 3, in a normal-temperature and normal-humidity environment and also in a high-temperature and high-humidity environment, penetration into the dents of the optical sheet and the change over time thereof are reduced. From the results of Examples 1 to 3, the adhesive layer may have creep deformation rates such that, e.g., a creep deformation rate A of 2% or less and a creep deformation rate B of 3% or less. Creep deformation rate measurements were not taken for the adhesive layers according to Comparative Examples 1 to 3.

In the adhesive layers according to Comparative Example 1 and Comparative Example 3, the height of the adhesive layer within the dents after the high-temperature and high-humidity endurance test was large, and thus penetration into the dents of the optical sheet (concavo-convex textured film) was not adequately reduced in a high-temperature and high-humidity environment. The adhesive layers according to Comparative Example 1 and Comparative Example 3 had gel fractions of 0% and 260, respectively, after being retained at a temperature of 85°C and a relative humidity of 85% for 300 hours. In particular, the adhesive layer according to Comparative Example 3, which was formed without using a cross-linking catalyst, cross-linking of the polyester resin may not have sufficiently occurred during the cross-linking treatment step (treatment step at 40°C for 3 days) as compared to the adhesive layers according to Examples 1 to 3 in which a cross-linking catalyst was used, possibly resulting in a failure to adequately suppress hydrolysis of the ester linkage.

In the adhesive layer according to Comparative Example 2, penetration into the dents of the optical sheet (concavo-convex textured film) was reduced in a high-temperature and high-humidity environment, and the gel fraction after being retained at a temperature of 85°C and a relative humidity of 85% for 300 hours was maintained as high as 94%; however, it had a 180° peel adhesive strength with respect to a PMMA film of 80 mN/20 mm or more, indicative of inadequate adhesion.

## INDUSTRIAL APPLICABILITY

Adhesive layers and optical stacks according to the present invention are broadly used in optical devices, such as display devices or illumination devices.

## REFERENCE SIGNS LIST

**10a, 10b** first optical sheet
**12s, 18s** principal face (surface)
**20a, 20b** adhesive layer
**30** second optical sheet
**32s, 38s** principal face (surface)
**50** light guide plate
**60** light source
**100A, 100B, 101A, 102A, 101B, 102B** optical stack
**200** illumination device

## Claims

1. An adhesive layer formed by cross-linking an adhesive composition containing: a polyester resin that is a copolymer of a polycarboxylic acid and a polyalcohol; a cross-linking agent; and at least one cross-linking catalyst selected from the group consisting of an organic zirconium compound, an organic iron compound, and an organic aluminum compound,

   the adhesive layer having a gel fraction of 40% or more after being retained at a temperature of 85°C and a relative humidity of 85% for 300 hours, and
   the adhesive layer having a 180° peel adhesive strength of 100 mN/20 mm or more with respect to a PMMA film.

2. The adhesive layer of claim 1, wherein the polycarboxylic acid comprises an aromatic dicarboxylic acid.

3. The adhesive layer of claim 1 or 2, wherein the polyalcohol comprises an aliphatic diol or an alicyclic diol.

4. The adhesive layer of any one of claims 1 to 3, wherein the cross-linking agent comprises an isocyanate-based cross-linking agent.

5. The adhesive layer of claim 4, wherein the isocyanate-based cross-linking agent comprises an aliphatic isocyanate-based cross-linking agent.

6. The adhesive layer of any one of claims 1 to 5, having a thickness of not less than 3 $\mu$m and not more than 20 $\mu$m.

7. The adhesive layer of any one of claims 1 to 6, having a gel fraction of 55% or more after being retained at a temperature of 85°C and a relative humidity of 85% for 300 hours.

8. The adhesive layer of any one of claims 1 to 7, having a creep deformation rate of 10% or less when a stress of 10,000 Pa is applied for 1 second at 50°C and a creep deformation rate of 16% or less when a stress of 10,000 Pa is applied for 30 minutes at 50°C in a creep test using a rotational rheometer.

9. An optical stack comprising:

   a first optical sheet that includes a first principal face having a concavo-convex structure and a second principal face at an opposite side from the first principal face; and
   the adhesive layer of any one of claims 1 to 8 being disposed on the first principal face of the first optical sheet, wherein
   the concavo-convex structure includes flat portions that are in contact with the adhesive layer.

**10.** The optical stack of claim 9, further comprising a second optical sheet that is disposed at an opposite side of the adhesive layer from the first optical sheet.

FIG.1

*FIG.2*

101A

32s

12s

30

20a

100A

10a

P

H

θ

18s

38s

*FIG.3*

102A

32s   12s

40

50

30

101A

20a

100A

10a

P

H

θ

18s

38s

*FIG.4*

14s  16s  17s  38s 28s 18s

14

15

10b
20b
100B
101B
30

32s  22s  12s(10s)

*FIG.5*

10b

12s(10s)

14

15

17s

16s

18s

FIG.6

*FIG.7A*

*FIG.7B*

## INTERNATIONAL SEARCH REPORT

| International application No. |
| --- |
| **PCT/JP2022/004554** |

### A. CLASSIFICATION OF SUBJECT MATTER

*C09J 11/06*(2006.01)i; *G02C 1/06*(2006.01)i; *C09J 167/02*(2006.01)i; *C09J 7/35*(2018.01)i; *G02B 1/04*(2006.01)i; *G02B 7/00*(2021.01)i

FI: C09J7/35; C09J167/02; C09J11/06; G02C1/06; G02B7/00 F; G02B1/04

According to International Patent Classification (IPC) or to both national classification and IPC

### B. FIELDS SEARCHED

Minimum documentation searched (classification system followed by classification symbols)

C09J11/06; G02C1/06; C09J167/02; G02B7/00; G02B1/04; C09J7/35

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2019-073685 A (NIPPON SYNTHETIC CHEM. IND. CO., LTD.) 16 May 2019 (2019-05-16)<br>claims, paragraphs [0130], [0138]-[0164] | 1-10 |
| X | JP 2019-059892 A (NIPPON SYNTHETIC CHEM. IND. CO., LTD.) 18 April 2019 (2019-04-18)<br>claims, paragraphs [0102], [0107]-[0125] | 1-10 |
| X | JP 2020-172625 A (MITSUBISHI CHEMICAL HOLDINGS CORP.) 22 October 2020 (2020-10-22)<br>claims, paragraphs [0116], [0122]-[0145] | 1-8 |
| A | JP 2014-043550 A (NITTO DENKO CORP.) 13 March 2014 (2014-03-13)<br>entire text | 1-10 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **30 March 2022** | **12 April 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/004554**

| Patent document cited in search report | | | Publication date (day/month/year) | Patent family member(s) | | Publication date (day/month/year) |
|---|---|---|---|---|---|---|
| JP | 2019-073685 | A | 16 May 2019 | US 2020/0216720 A1 claims, paragraphs [0217], [0226]-[0305] WO 2019/073944 A1 EP 3696243 A TW 201922838 A CN 111108170 A | | |
| JP | 2019-059892 | A | 18 April 2019 | (Family: none) | | |
| JP | 2020-172625 | A | 22 October 2020 | (Family: none) | | |
| JP | 2014-043550 | A | 13 March 2014 | US 2014/0039123 A1 full text EP 2692756 A1 CN 103570912 A KR 10-2014-0016844 A TW 201408744 A | | |

Form PCT/ISA/210 (patent family annex) (January 2015)

**EP 4 296 328 A1**

**REFERENCES CITED IN THE DESCRIPTION**

**Patent documents cited in the description**

- JP 2012007046 A
- WO 2011124765 A
- WO 2019087118 A
- WO 2021167090 A
- JP 2013524288 W